# EUROPÄISCHE PATENTSCHRIFT

(11) **EP 2 919 968 B1**
(45) Veröffentlichungstag und Bekanntmachung des Hinweises auf die Patenterteilung: **21.12.2016**
(21) Anmeldenummer: 13789826.8
(22) Anmeldetag: 15.11.2013
(51) Int. Cl.: B29C 67/24, B29C 70/48, B60N 2/68

(54) **SITZSTRUKTUR UND EIN VERFAHREN ZU DEREN HERSTELLUNG**
SEAT STRUCTURE AND METHOD FOR THE PRODUCTION THEREOF
STRUCTURE DE SIÈGE ET SON PROCÉDÉ DE FABRICATION

(30) Priorität: 15.11.2012 DE 102012220854
(43) Veröffentlichungstag der Anmeldung: 23.09.2015
(73) Patentinhaber: Johnson Controls GmbH, 51399 Burscheid (DE)
(72) Erfinder: KOEVER, Axel, 50859 Köln (DE); BÄCK, Gerhard, A-4311 Schwertberg (AT)
(74) Vertreter: Finger, Catrin
(86) Internationale Anmeldenummer: PCT/EP2013/073919
(87) Internationale Veröffentlichungsnummer: WO 2014/076227

(56) Entgegenhaltungen:
- EP-A1- 1 724 098
- EP-A1- 2 489 499
- WO-A2-2011/151710
- DE-A1-102008 047 564
- DE-A1-102009 040 901
- DE-C1- 19 650 854
- US-A- 5 988 757
- US-A1- 2011 135 934
- US-A1- 2012 234 455

## Beschreibung

Die Erfindung betrifft eine Sitzstruktur und ein Verfahren zu deren Herstellung.

Stand der Technik zur Erstellung von thermoplastischen, faserverstärkten Bauteilen ist das für strukturelle Anwendungen eingesetzte GMT (Glasfasermatten-Thermoplast) Verfahren, wobei glasfaserverstärkte Kunststoffplatten gestapelt, erhitzt und in einem Fliespressverfahren verformt werden. Hierdurch lassen sich verrippte Strukturen darstellen, die z.B. im Rücksitzbereich im Einsatz sind. Ein neueres Verfahren stellt die Verwendung von sogenannten Organoblechen im Thermoformprozess oder in Kombination mit einem Hinterspritzprozess dar. Dieser kann nachträglich oder in einem Schritt erfolgen. Hierbei bestehen die Organobleche aus einem Fasergewebe, welches bereits in einem vorgeschalteten Prozess mit einer thermoplastischen Matrix (z.B. PA6: Polyamid 6) versehen und zu Platten konfektioniert wird. Der Vorteil gegenüber GMT ist das deutlich geringere Strukturgewicht durch den Einsatz von Endlosfasern in Gewebeform. Eine weitere Möglichkeit besteht durch den Einsatz von Mischgeweben bestehend aus Thermoplast und Verstärkungsfasern, welche in einem Pressprozess verarbeitet werden können. Ebenso ist ein D-LFT Pressverfahren (langfaserverstärkte Thermoplaste) bekannt, bei denen Langglasfasergranulate in einem Extruder mit der Matrix compoundiert werden und als Materialstrang in ein Presswerkzeug eingelegt werden. Eine Kombination von verschiedenen Verfahren ist hierbei möglich. Im Bezug auf RIM-Technologie (reaction injection molding) werden Spritzgussteile mit einer reaktiven Polyurethankomponente überflutet, um eine entsprechende Oberflächengestaltung zu erreichen. Diese hat allerdings keinen verstärkenden Charakter.

Die US 5,988,757 A offenbart eine Fahrzeugsitzanordnung umfassend einen unteren Sitzrahmen aus Aluminium mit ersten und zweiten Seitenträgern mit einer Dicke von weniger als vier Millimetern über einen wesentlichen Teil davon. Der Sitzlehnenrahmen ist schwenkbar mit dem unteren Sitzrahmen verbunden und umfasst ein konturiertes strukturelles mittels Reaktionsspritzguss (SRIM) hergestelltes Material. In einer alternativen Ausführungsform umfasst der Lehnenrahmen eine Vielzahl von Glasmattenschichten, die von einem gegossenen Urethanmaterial umschlossen sind. Zusätzliche Glasmattenschichten sind in hochbelasteten Konzentrationsbereichen für zusätzliche strukturelle Integrität bereitgestellt.

Die DE 196 50 854 C1 offenbart ein Verfahren und eine Vorrichtung zur Herstellung eines Mehrschicht-Kunststoffteils, bei dem ein Kunststoff-Spritzgussteil mit mindestens einer Schicht aus 2-Komponenten-Duroplast beschichtet wird. Das Kunststoffteil und die Schicht aus 2-Komponenten-Duroplast werden nacheinander zyklussynchron im selben Werkzeug gespritzt, wobei die Reaktionszeit des 2-Komponenten-Duroplasts an die Zeit für das Spritzen des Kunststoffteils angepasst wird. Eine Vorrichtung zur Herstellung eines Mehrschicht-Kunststoffteils umfasst eine Spritzgussmaschine, in der eine RIM-Vorrichtung zum Einbringen eines 2-Komponenten-Duroplasts in ein Mehrkomponenten-Spritzgusswerkzeug vorgesehen ist. Dadurch ist es möglich, dass die Herstellung von Mehrschicht-Kunststoffteilen gleichzeitig mittels mehrerer Werkzeuge erfolgen kann, wobei in einem Werkzeug die Beschichtung eines vorher gefertigten Kunststoffteils erfolgt, während in einem zweiten Werkzeug bereits ein nächstes Kunststoffteil gespritzt wird.

Die US 2012/234455 A1 beschreibt ein Verfahren zur Herstellung einer Fahrzeugsitzstruktur, einen Fahrzeugsitz oder eine Fahrzeugsitzbank. Eine Rahmenstruktur und Verstärkungsrippen und Absorptionsrippen werden auf mindestens eine Rückschale geformt, wobei strukturelle Einsatz-Komponenten in oder an der Rückschale und/oder der Rahmenstruktur angeordnet werden.

Die EP 2 489 499 A1 offenbart ein Faserverbund-Bauteil, das eine Tragstruktur für ein Kraftfahrzeug bildet, mit Fasern, die in einen thermoplastischen Kunststoff eingebettet sind. Die Fasern und der thermoplastische Kunststoff oder ein Monomer, das durch Polymerisation ein thermoplastischer Kunststoff wird, bilden vor dem Einspritzen eines zusätzlichen thermoplastischen Kunststoffes oder eines zusätzlichen Monomers, das nach einer Polymerisation ein zusätzlicher thermoplastischer Kunststoff ist, in und/oder um das erwärmte Faserverbund-Bauteil Hohl- und/oder Freiräume, die von dem geschlossenen Spritzgießwerkzeug mit einem zusätzlichen thermoplastischen Kunststoff gefüllt sind, der zusätzliche Bereiche des Faserverbund-Bauteiles bildet.

Aufgabe der vorliegenden Erfindung ist es, eine verbesserte Sitzstruktur und ein verbessertes Verfahren zu deren Herstellung anzugeben.

Die Aufgabe wird erfindungsgemäß mit einem Verfahren nach Anspruch 1 und mit einer Sitzstruktur nach Anspruch 11 gelöst.

Vorteilhafte Weiterbildungen sind Gegenstand der Unteransprüche.

Bei einem erfindungsgemäßen Verfahren zur Herstellung einer Sitzstruktur wird ein Vorspritzling in einem Spritzwerkzeug gespritzt und anschließend im gleichen Spritzwerkzeug mit Faserlagen versehen, welche im Anschluss mit reaktiven Komponenten gefüllt werden, wobei die reaktiven Komponenten in einer Mischkammer unmittelbar vor dem Einspritzen in das Spritzwerkzeug zu einer reaktiven Matrix gemischt werden, wobei das Einspritzen erfolgt, bevor eine Reaktion der reaktiven Matrix abgeschlossen ist.

Beim erfindungsgemäßen Verfahren handelt es sich um so genanntes Thermoplastic Reinforced Reactive Injection Molding (TR-RIM).

Hierzu wird die sogenannte In-Situ-Spritzgusstechnik verwendet, bei der ein trockenes Faserhalbzeug in einem geschlossenen Werkzeug mit einer Matrix reaktiv getränkt wird.

Das Sitzstrukturbauteil wird in zwei Teile unterteilt: einen Vorspritzling und eine Verstärkungslage. Hierbei wird der Vorspritzling auf konventionelle Weise gespritzt und anschließend beispielsweise in einem 2K-Prozess (Zwei Komponenten) in der gleichen Anlage mit den Faserlagen versehen, welche im Anschluss mit reaktiven Komponenten gefüllt werden. In einer bei der Vermischung dieser Komponenten startenden Reaktion verbindet sich die Verstärkungslage stoffschlüssig mit dem Vorspritzling zu einem Bauteil. Die Reaktion der Komponenten beginnt bei deren Vermischung in einer Mischkammer unmittelbar vor dem Einspritzen in die Anlage, so dass die Reaktion zeitlich erst nach der vollständigen Imprägnierung der Faserlagen soweit fortschreitet, dass die Viskosität der reaktiven Matrix ansteigt und/oder eine Kristallisierung stattfindet.

Erfindungsgemäß wird der Vorspritzling als Dichtung für die reaktive Matrix verwendet, indem der Vorspritzling mit einem zur Faserlage hin abgewinkelten, überstehenden Bereich als Dichtung für die reaktive Matrix versehen wird.

Diese Technik kann auch im Zusammenhang mit dem Überfluten von Spritzgussteilen mit Polyurethan zur Oberflächengestaltung verwendet werden.

Um eine gleichmäßige Faserdurchtränkung zu erreichen, können die Faserlagen zusätzlich am Rand verprägt werden, so dass ein entsprechender Gegendruck entsteht, wodurch ein Voreilen der Matrix verhindert werden kann. Hierdurch wird ein nachträglicher Beschnitt der Verstärkungslage eliminiert. Die Verprägungszone kann so abgestimmt sein, dass alle Fasern von der Matrix umschlossen werden. Alternativ kann ein Vakuum zusätzlich angelegt werden, um den Füllprozess zu optimieren.

Durch das Verfahren können trockene Faserhalbzeuge mit unterschiedlichen Faserwinkeln und Lagen mit einem Vorspritzling, der beispielsweise eine Rippenstruktur beinhalten kann, kostengünstig verbunden werden. Hierbei entsteht durch den reaktiven Prozess eine Matrix, die höhere Molekulargewichte beinhaltet als vergleichbare Spritzgussmaterialien.

In einer Ausführungsform der Erfindung umfassen die reaktiven Komponenten mindestens eine Monomerkomponente, beispielsweise ε-Caprolactam.

Weiter können die reaktiven Komponenten einen Katalysator und/oder einen Aktivator umfassen.

Durch den Einsatz der Rohmaterialien (Monomer, Glasfaser) entfallen kostenaufwendige Verarbeitungsschritte im Vorfeld. Durch die spezielle Abdichtungstechnik kann ebenfalls ein nachgeschalteter Beschnittprozess entfallen. Durch die Kombination der Spritzgusstechnologie mit endlosfaserverstärkten Oberflächen können neue Bauteilfunktionen in einem Prozess integriert werden. Durch den infolge der geringen Viskosität der Monomerkomponente geringen erforderlichen Druck bei der Füllung der Faserstruktur kann die Größe einer zur Herstellung verwendeten Anlage deutlich reduziert werden. Hierdurch wird eine wirtschaftliche Fertigung unterstützt.

Die thermoplastische endlosfaserverstärkte Sitzstruktur wird dabei ohne den Einsatz von bereits vorkonfektionierten Organoblechen und ohne nachträglichen Beschnitt hergestellt.

Im Vergleich mit herkömmlichen Sitzstrukturen aus Stahl können mittels des erfindungsgemäßen Verfahrens erheblich leichtere, beispielsweise mindestens 30 % leichtere, jedoch mechanisch stabile Sitzstrukturen bei geringen Kosten in einem automatisierten, industriellen Herstellungsprozess innerhalb kurzer Taktzeiten von beispielsweise weniger als 300 s hergestellt werden. Die so erzielte Gewichtseinsparung kann bei Verwendung der Sitzstruktur in einem Fahrzeugsitz, beispielsweise einem Frontsitz oder einem Rücksitz, zu verbesserter Kraftstoffeffizienz und verringerten CO₂-Emissionen führen.

Die Monomerkomponenten der thermoplastischen Matrix, beispielsweise PA6 (ε-Caprolactam), werden verwendet, um Fasern, beispielsweise Glas- oder Carbon-Fasern mittels Spritzgusstechnik zu imprägnieren. Die Reaktion der Komponenten beginnt bei deren Vermischung in der Mischkammer unmittelbar vor dem Einspritzen in die Anlage, schreitet aber erst nach dem Einspritzen und der vollständigen Imprägnierung der Faserlagen innerhalb des Gusswerkzeugs soweit fort, dass die Viskosität der reaktiven Matrix ansteigt und/oder eine Kristallisierung der thermoplastischen Matrix stattfindet. Nachdem die Reaktion beendet ist, kann das Teil aus dem Gusswerkzeug entnommen und verwendet werden.

Die In-Situ-Polymerisation zum Imprägnieren der Fasern innerhalb der Gussform wird durch die Monomerkomponente der thermoplastischen Matrix und ihre extrem niedrige Viskosität (beispielsweise 4 mPas) ermöglicht. Dies ermöglicht das Einspritzen der Komponenten und das Imprägnieren der Faser-Vorform, bevor die Reaktion abgeschlossen ist. Als thermoplastische Matrix wird beispielsweise Polyamid 6 (PA6) auf Basis von ε-Caprolactam-Monomer verwendet. Polyamid 6 wird durch hydrolytische Ringöffnungspolymerisation von Caprolactam-Monomer gebildet. Durch die geringe Viskosität der Monomerkomponente kann das Einbetten aller Fasern in die thermoplastische Matrix, auch bei Verwendung von Karbonfasern erreicht werden. Ebenso ist die Darstellung feiner Strukturen, beispielsweise Rippen und Hinterschneidungen, möglich. Hingegen sind das Einspritzen der fertig polymerisierten thermoplastischen Matrix und das Imprägnieren der Fasern damit aufgrund der hohen Viskosität der fertigen thermoplastischen Matrix kaum möglich.

Die Fasern können als Gewebe, Gelege (NCF: non crimp fabrics, das heißt unidirektionale, bidirektionale oder multiaxiale Gelegekonstruktionen) oder als textiles Gewirk aus verschiedenen Materialien, beispielsweise Glas, Karbon, Polyamid oder Naturfasern ausgebildet sein.

In einer Ausführungsform der Erfindung wird eine Gussform des Spritzwerkzeugs vor dem Einbringen der reaktiven Komponenten erwärmt.

Eine erfindungsgemäße Sitzstruktur ist mittels des erfindungsgemäßen Verfahrens hergestellt und umfasst einen Vorspritzling, der stoffschlüssig mit einer Verstärkungslage aus mit einer reaktiven Matrix gefüllten und imprägnierten Fasern verbunden ist.

Dabei umfasst der Vorspritzling erfindungsgemäß einen nach innen zur Verstärkungslage hin abgewinkelten, überstehenden Bereich zur Abdichtung der reaktiven Matrix.

Weiterhin können die Fasern in einem Bereich an einem Rand des Vorspritzlings komprimiert und/oder verprägt sein.

Die Sitzstruktur kann Teil eines Fahrzeugsitzes sein, beispielsweise eines Frontsitzes oder eines Rücksitzes.

Anhand der beigefügten schematischen Figuren wird die Erfindung näher erläutert.

Dabei zeigen:
- Figur 1: in einer perspektivischen Ansicht eine Sitzstruktur aus Stahl gemäß dem Stand der Technik,
- Figur 2: in einer perspektivischen Ansicht eine Sitzstruktur aus einer glasfaserverstärkten thermoplastischen Matrix gemäß dem Stand der Technik,
- Figur 3: in einer perspektivischen Ansicht einen Vorspritzling zur Herstellung einer Sitzstruktur,
- Figur 4: in einer Schnittansicht ein Detail des Vorspritzlings mit einer Verstärkungslage, und
- Figur 5: in einer perspektivischen Ansicht den Vorspritzling mit der Verstärkungslage.

Einander entsprechende Teile sind in allen Zeichnungen mit denselben Bezugszeichen versehen.

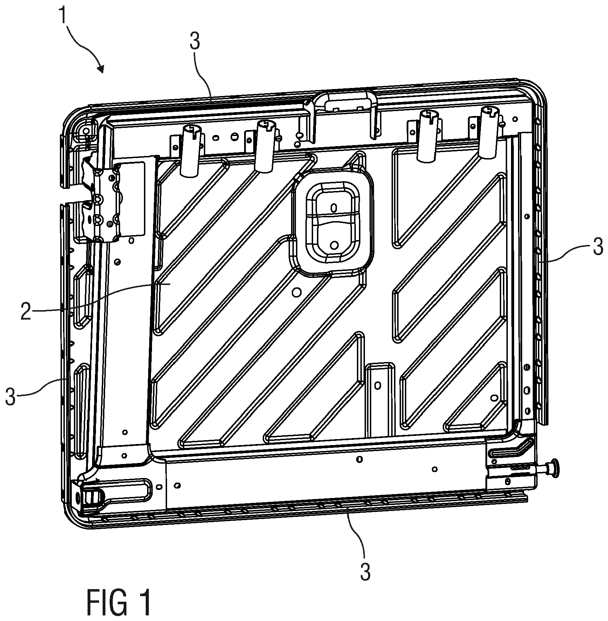

Die Figur 1 zeigt in einer perspektivischen Ansicht eine Sitzstruktur 1 mit einer Rückwand 2 aus beispielsweise 0,6 mm dickem Stahlblech, die von Profilen 3 aus beispielsweise 1,0 mm bis 1,2 mm dickem Stahl eingefasst ist, gemäß dem Stand der Technik. Die Sitzstruktur weist eine hohe mechanische Stabilität auf, ist jedoch relativ schwer, beispielsweise 12,8 kg.

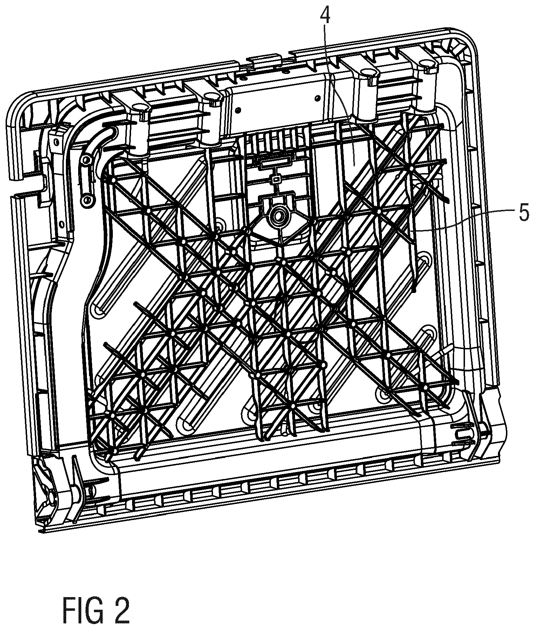

Die Figur 2 zeigt in einer perspektivischen Ansicht eine Sitzstruktur 1 aus einer glasfaserverstärkten thermoplastischen Matrix gemäß dem Stand der Technik. Die Sitzstruktur 1 umfasst Organobleche 4 aus einer glasfaserverstärkten thermoplastischen Matrix, beispielsweise umfassend PA6 und 1,5 mm dick. Weiter sind Verstärkungsrippen 5 aus PA6 mit 30%-40% Glasfasern vorgesehen. Durch die überwiegende Verwendung von Halbzeugen ist die Sitzstruktur 1 zwar leichter als die in Figur 1 gezeigte, verursacht jedoch auch höhere Herstellungskosten.

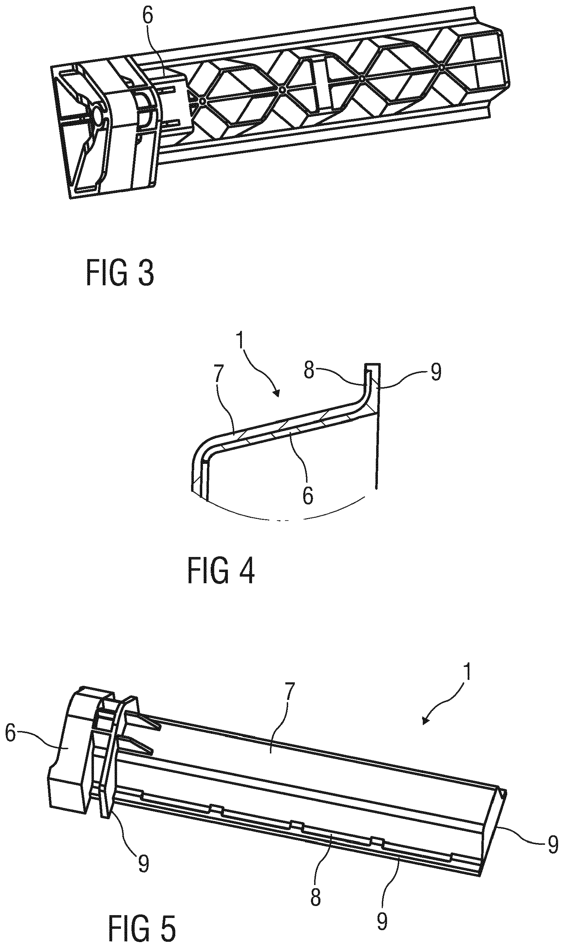

Die Figur 3 zeigt in einer perspektivischen Ansicht einen Vorspritzling 6 zur Herstellung einer Sitzstruktur 1 mittels eines erfindungsgemäßen Verfahrens.

Der Vorspritzling 6 wird in einer Spritzgussanlage auf konventionelle Weise gespritzt und anschließend in der gleichen Anlage mit einer Verstärkungslage 7 aus Fasern versehen, welche im Anschluss mit reaktiven Komponenten, beispielsweise Caprolactam-Monomer + Katalysator + Aktivator gefüllt und imprägniert werden. In einer bei der Vermischung dieser Komponenten startenden Polymerisations-Reaktion verbindet sich die Verstärkungslage 7 stoffschlüssig mit dem Vorspritzling 6 zu einem Bauteil, der Sitzstruktur 1. Die Reaktion der Komponenten beginnt bei deren Vermischung in einer Mischkammer unmittelbar vor dem Einspritzen in die Spritzgussanlage, so dass die Reaktion zeitlich erst nach der vollständigen Imprägnierung der Verstärkungslage soweit fortschreitet, dass die Viskosität der reaktiven Matrix ansteigt und/oder eine Kristallisierung stattfindet.

Der Vorspritzling 6 kann als Dichtung für die reaktive Matrix verwendet werden. Die Abdichtung gegen die Fasern, die durch diese Maßnahme sicher hinter dem Thermoplastrand verborgen bleiben und gegen die flüssige Matrix, übernimmt ein nach innen zur Faserlage hin abgewinkelter, überstehender Bereich 9 des Vorspritzlings 6. Der Vorspritzling 6 wird mit dem überstehenden Bereich 9 bereits bei seiner Herstellung versehen.

In einem Dichtbereich 8 am Rand des Vorspritzlings 6 können die Fasern komprimiert und/oder verprägt ausgebildet sein, so dass ein entsprechender Gegendruck entsteht, wodurch ein Voreilen der Matrix verhindert und eine gleichmäßige Faserdurchtränkung erreicht werden kann.

Die Fasern können als Gewebe (als Flies) oder als Gelege ( beispielsweise NCF: non crimp fabrics, das heißt unidirektionale, bidirektionale oder multiaxiale Gelegekonstruktionen) oder als textiles Gewirk aus verschiedenen Materialien, beispielsweise Glas, Karbon, Polyamid oder Naturfasern ausgebildet sein.

Die Figur 4 zeigt in einer Schnittansicht ein Detail der Sitzstruktur 1, umfassend den Vorspritzling 6 mit der Verstärkungslage 7.

Die Figur 5 zeigt in einer perspektivischen Ansicht die Sitzstruktur 1, umfassend den Vorspritzling 6 mit der Verstärkungslage 7.

Die Verwendung der TR-RIM-Technologie (Thermoplastic Reinforced Reactive Injection Molding) ermöglicht den Verzicht auf Halbzeuge, da das Material innerhalb der Gussform entsteht, ähnlich wie bei Resin-Transfer-Moulding (RTM). Auf diese Weise können die Kosten der endlosfaserverstärkten Plastikteile um beispielsweise 15% verringert werden.

Die Sitzstruktur 1 kann in einer Spritzgussvorrichtung hergestellt werden, wobei die Komponenten zur Bildung des Polymers in eine erwärmte Gussform eingebracht werden.

### Bezugszeichenliste

- 1: Sitzstruktur
- 2: Rückwand
- 3: Profile
- 4: Organoblech
- 5: Verstärkungsrippe
- 6: Vorspritzling
- 7: Verstärkungslage
- 8: Dichtbereich
- 9: Überstehender Bereich

## Patentansprüche

1. Verfahren zur Herstellung einer Sitzstruktur (1), wobei ein Vorspritzling (6) gespritzt und anschließend in einem Spritzwerkzeug mit Faserlagen versehen wird, welche im Anschluss mit reaktiven Komponenten gefüllt werden, wobei die reaktiven Komponenten in einer Mischkammer unmittelbar vor dem Einspritzen in das Spritzwerkzeug zu einer reaktiven Matrix gemischt werden, wobei das Einspritzen erfolgt, bevor eine Reaktion der reaktiven Matrix abgeschlossen ist, **dadurch gekennzeichnet, dass** der Vorspritzling im gleichen Spritzwerkzeug gespritzt wird, in dem er anschließend mit Faserlagen versehen wird und in dem diese mit reaktiven Komponenten versehen werden, wobei der Vorspritzling (6) als Dichtung für die reaktive Matrix verwendet wird, wobei der Vorspritzling (6) mit einem zur Faserlage hin abgewinkelten, überstehenden Bereich (9) als Dichtung für die reaktive Matrix versehen wird.

2. Verfahren nach Anspruch 1, **dadurch gekennzeichnet, dass** die Faserlagen an einem Rand komprimiert und/oder verprägt werden.

3. Verfahren nach einem der Ansprüche 1 oder 2, **dadurch gekennzeichnet, dass** ein Vakuum an das Spritzwerkzeug angelegt wird.

4. Verfahren nach einem der Ansprüche 1 bis 3, **dadurch gekennzeichnet, dass** als Fasern Glasfasern, Karbonfasern, Polyamidfasern oder Naturfasern verwendet werden.

5. Verfahren nach einem der Ansprüche 1 bis 4, **dadurch gekennzeichnet, dass** die Fasern als Gewebe, Gelege oder textiles Gewirk aus verschiedenen Materialien ausgebildet sind.

6. Verfahren nach einem der Ansprüche 1 bis 5, **dadurch gekennzeichnet, dass** die reaktiven Komponenten eine Monomerkomponente umfassen.

7. Verfahren nach Anspruch 6, **dadurch gekennzeichnet, dass** als Monomerkomponente ε-Caprolactam verwendet wird.

8. Verfahren nach einem der Ansprüche 6 oder 7, **dadurch gekennzeichnet, dass** die reaktiven Komponenten einen Katalysator umfassen.

9. Verfahren nach einem der Ansprüche 6 bis 8, **dadurch gekennzeichnet, dass** die reaktiven Komponenten einen Aktivator umfassen.

10. Verfahren nach einem der vorhergehenden Ansprüche, **dadurch gekennzeichnet, dass** eine Gussform des Spritzwerkzeugs vor dem Einbringen der reaktiven Komponenten erwärmt wird.

11. Sitzstruktur (1), hergestellt mit einem Verfahren nach einem der vorhergehenden Ansprüche, umfassend einen Vorspritzling (6), der stoffschlüssig mit einer Verstärkungslage (7) aus mit einer reaktiven Matrix gefüllten und imprägnierten Fasern verbunden ist, wobei der Vorspritzling (6) einen nach innen zur Verstärkungslage (7) hin abgewinkelten, überstehenden Bereich (9) zur Abdichtung der reaktiven Matrix umfasst.

12. Sitzstruktur (1) nach Anspruch 11, **dadurch gekennzeichnet, dass** die Fasern in einem Dichtbereich (8) an einem Rand des Vorspritzlings (6) komprimiert und/oder verprägt sind.

13. Fahrzeugsitz, umfassend eine Sitzstruktur (1) nach einem der Ansprüche 11 oder 12.

## Claims

1. A method for producing a seat structure (1), wherein a pre-moulded part (6) is injection-molded and then, in an injection mold, provided with fiber layers which are subsequently filled with reactive components, wherein the reactive components are mixed in a mixing chamber immediately before injection into the injection mold to provide a reactive matrix, wherein the injection is effected before any reaction of the reactive matrix has concluded **characterized in that** the pre-moulded part is injection-molded in the same injection mold in which it is subsequently provided with fiber layers and in which these are provided with reactive components, wherein the pre-moulded part (6) is used as a seal for the reactive matrix wherein the pre-moulded part (6) is provided with a protruding region (9) angled toward the fiber layer as a seal for the reactive matrix.

2. The method as claimed in claim 1, **characterized in that** the fiber layers are compressed and/or embossed at one edge.

3. The method as claimed in any of claims 1 or 2, **characterized in that** a vacuum is applied to the injection mold.

4. The method as claimed in any of claims 1 to 3, **characterized in that** fibers used are glass fibers, carbon fibers, polyamide fibers or natural fibers.

5. The method as claimed in any of claims 1 to 4, **characterized in that** fibers are in the form of fabrics, laid scrims or textile knits made from various materials.

6. The method as claimed in any of claims 1 to 5, **characterized in that** the reactive components comprise a monomer component.

7. The method as claimed in claim 6, **characterized in that** the monomer component used is ε-caprolactam.

8. The method as claimed in either of claims 6 or 7, **characterized in that** the reactive components comprise a catalyst.

9. The method as claimed in any of claims 6 to 8, **characterized in that** the reactive components comprise an activator.

10. The method as claimed in any of the preceding claims, **characterized in that** a casting of the injection mold is heated prior to the introduction of the reactive components.

11. A seat structure (1) produced by a method as claimed in any of the preceding claims, comprising a pre-moulded part (6) cohesively bonded to a reinforcing layer (7) of fibers filled and impregnated with a reactive matrix, wherein the pre-moulded part (6) comprises a protruding region angled inward toward the reinforcing layer for sealing of the reactive matrix.

12. The seat structure (1) as claimed in claim 11, **characterized in that** the fibers have been compressed and/or embossed in a seal region (8) at one edge of the pre-moulded part (6).

13. A vehicle seat comprising a seat structure (1) as claimed in any of claims 11 or 12.

## Revendications

1. Procédé de fabrication d'une structure de siège (1), dans lequel on moule par injection une pièce pré-moulée par injection (6), puis, dans un moule d'injection, on la pourvoit de couches de fibres, qui sont ensuite chargées de composants réactifs, les composants réactifs étant mélangés dans une chambre de mélange immédiatement avant l'injection dans le moule d'injection pour donner une matrice réactive, l'injection ayant lieu avant la fin d'une réaction de la matrice réactive, **caractérisé en ce que** la pièce pré-moulée par injection est moulée par injection dans le même moule d'injection que celui dans lequel elle est ensuite pourvue de couches de fibres, et que celui dans lequel ces dernières sont pourvues de composants réactifs, la pièce pré-moulée par injection (6) étant utilisée en tant qu'étanchéité pour la matrice réactive, la pièce pré-moulée par injection (6) étant pourvue d'une zone (9) en saillie, coudée vers la couche de fibres, en tant qu'étanchéité pour la matrice réactive.

2. Procédé selon la revendication 1, **caractérisé en ce que** les couches de fibres sont comprimées et/ou estampées contre un bord.

3. Procédé selon l'une des revendications 1 ou 2, **caractérisé en ce qu'**on applique un vide au moule d'injection.

4. Procédé selon l'une des revendications 1 à 3, **caractérisé en ce qu'**on utilise en tant que fibres des fibres de verre, des fibres de carbone, des fibres de polyamide ou des fibres naturelles.

5. Procédé selon l'une des revendications 1 à 4, **caractérisé en ce que** les fibres sont conçues sous forme d'un tissu, d'une grille ou d'un tricot textile en différents matériaux.

6. Procédé selon l'une des revendications 1 à 5, **caractérisé en ce que** les composants réactifs comprennent un composant monomère.

7. Procédé selon la revendication 6, **caractérisé en ce qu'**on utilise en tant que composant monomère de l'ε-caprolactame.

8. Procédé selon l'une des revendications 6 ou 7, **caractérisé en ce que** les composants réactifs comprennent un catalyseur.

9. Procédé selon l'une des revendications 6 à 8, **caractérisé en ce que** les composants réactifs comprennent un activateur.

10. Procédé selon l'une des revendications précédentes, **caractérisé en ce qu'**on chauffe un moule de coulée du moule d'injection avant l'introduction des composants réactifs.

11. Structure de siège (1), fabriquée par un procédé selon l'une des revendications précédentes, comprenant une pièce pré-moulée par injection (6), qui est assemblée avec correspondance de matière à une couche de renforcement (7) en fibres chargées et imprégnées d'une matrice réactive, la pièce pré-moulée par injection (6) comprenant, pour étancher la matrice réactive, une zone (9) en saillie, coudée vers l'intérieur vers la couche de renforcement (7).

12. Structure de siège (1) selon la revendication 11, **caractérisée en ce que** les fibres sont comprimées et/ou estampées dans une zone d'étanchéité (8) contre le bord de la pièce pré-moulée par injection (6).

13. Siège de véhicule, comprenant une structure de siège (1) selon l'une des revendications 11 ou 12.
